(19) Europäisches Patentamt
European Patent Office
Office européen des brevets

(11)　EP 1 825 583 B1

(12)　EUROPÄISCHE PATENTSCHRIFT

(45) Veröffentlichungstag und Bekanntmachung des Hinweises auf die Patenterteilung:
**20.01.2016  Patentblatt 2016/03**

(21) Anmeldenummer: **05784126.4**

(22) Anmeldetag: **16.09.2005**

(51) Int Cl.:
***H02H 7/30*** (2006.01)

(86) Internationale Anmeldenummer:
**PCT/AT2005/000375**

(87) Internationale Veröffentlichungsnummer:
**WO 2006/060830 (15.06.2006 Gazette 2006/24)**

(54) **HAUPTSCHALTGERÄT FÜR DEN BACK-UP SCHUTZ GEGEN ELEKTRISCHEN SCHLAG IN SCHUTZGEERDETEN VERBRAUCHERANLAGEN MIT NETZSPANNUNGSABHÄNGIGER FEHLERSTROMAUSLÖSUNG UND HOHEM SELEKTIVITÄTSVERHALTEN**

MASTER BREAKER DEVICE FOR BACK-UP PROTECTION AGAINST ELECTRIC SHOCK IN EARTHED USER UNITS WITH MAINS VOLTAGE DEPENDENT RESIDUAL CURRENT TRIGGERING AND HIGH SELECTIVITY

APPAREIL DE COUPURE PRINCIPAL SERVANT DE PROTECTION DE SECOURS CONTRE TOUTE DECHARGE ELECTRIQUE DANS DES INSTALLATIONS DE CONSOMMATEURS PROTEGEES PAR MISE A LA TERRE AVEC DECLENCHEMENT PAR COURANT RESIDUEL DEPENDANT DE LA TENSION DE RESEAU ET HAUTE SELECTIVITE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.12.2004  AT 20822004**

(43) Veröffentlichungstag der Anmeldung:
**29.08.2007  Patentblatt 2007/35**

(73) Patentinhaber: **Eaton Industries (Austria) GmbH 3943 Schrems (AT)**

(72) Erfinder: **BIEGELMEIER, Gottfried A-1195 Wien (AT)**

(74) Vertreter: **Eaton IP Group EMEA c/o Eaton Industries Manufacturing GmbH Route de la Longeraie 7 1110 Morges (CH)**

(56) Entgegenhaltungen:
**EP-A- 0 495 771　　AT-B- 412 830**

**Beschreibung**

Ein Hauptschaltgerät für den Brandschutz in genullten Verbraucheranlagen mit netzspannungsabhängiger Fehlerstromauslösung und hohem Selektivitätsverhalten ist bekannt (AT 412 830), das einen durchgeführten Neutralleiter besitzt. Dies ist bei der Nullung (TN-System nach IEC 60364) vorteilhaft, da in diesem Schutzsystem der Neutralleiter immer zuverlässig geerdet und das Verteilungsnetz so aufgebaut ist, daß bei Netzfehlern in Form von Außenleitererd-schlüssen das Risiko, daß der Neutralleiter Fehlerspannungen über 50 V annimmt, vertretbar ist.

Da außerdem bei der Nullung der Fehlerschutz durch Überstrom-Schutzeinrichtungen sichergestellt wird, ist die in der Praxis geforderte Selektivität im Fehlerfall durch die in Serie geschalteten Überstrom-Schutzeinrichtungen wegen der gegen die Enden der Stromkreise zu sinkenden Nennstromstärken gegeben.

Das ist bei schutzgeerdeten Verbraucheranlagen (TT-System nach IEC 60364) nicht der Fall, in denen Fehlerstrom-Schutzeinrichtungen zentral in den Stromverteilungen installiert sind. Tritt an irgendeiner Stelle in der Installation ein Fehler auf, dann wird die gesamte Stromverteilung, also auch die nicht fehlerbehafteten Stromkreise, durch die zugeordneten Fehlerstrom-Schutzeinrichtungen ausgeschaltet.

Dazu kommt, daß bei Gewittern oft Überschläge in den Installationen auftreten, wodurch Stoßströme oder Netzfolgeströme gegen Erde auftreten, die bei Fehlerstromschutzeinrichtungen der allgemeinen Bauart zu Fehlauslösungen führen, wodurch wieder die gesamte Verbraucheranlage ausgeschaltet wird.

Um gegenüber Fehlerstrom-Schutzeinrichtungen allgemeiner Bauart ein selektives Verhalten zu erreichen, wurde die Bauart S genormt. Sie besitzt auch bei höheren Fehlerströmen über dem fünffachen Wert des Nennfehlerstromes eine minimale Auslösezeit über 0,05 s bzw. bei 500 A über 0,04 s und bleibt damit im gesamten in der Praxis üblichen Fehlerstrombereich selektiv mit in Serie geschalteten Fehlerstrom-Schutzeinrichtungen der allgemeinen Bauart (siehe Tabelle 1).

Aber auch der Einbau einer Fehlerstrom-Schutzeinrichtung der Bauart S ermöglicht nur eine Selektivitätsstufe, und das ist für größere Verteilungen zu wenig, z.B. wenn für einige Endstromkreise der Zusatzschutz durch Fehlerstrom-Schutzeinrichtungen mit einem Nennfehlerstrom $I_{\Delta N}$ = 30 mA gefordert wird.

Oft sind auch in schutzgeerdeten Verbraucheranlagen die Erdungswiderstände niedrig, z.B. im Ohm-Bereich, und dann können Fehlerströme von einigen zehn bis zu einigen hundert Ampere zum Fließen kommen. Sie werden durch die Schnellauslöser von Leitungsschutzschaltern (dafür wird in der Literatur oft die Abkürzung LS-Schalter verwendet) oder durch Schmelzsicherungen in Bruchteilen von Sekunden ausgeschaltet. Fehlerstrom-Schutzeinrichtungen der allgemeinen Bauart, aber auch FI-Schalter der Bauart S lösen in diesen Fällen oft zusätzlich und unnötig aus und schränken damit die Verfügbarkeit der Stromversorgung unnötig ein. Man erkennt dies aus den Auslösewerten der Fehlerstrom-Schutzeinrichtungen.

Tabelle 1: Maximale Gesamtausschaltzeiten und minimale Auslösezeiten von Fehlerstrom-Schutzeinrichtungen

| Bauart | (3) | Fehlerstrom | | | |
|---|---|---|---|---|---|
| | | $I_{\Delta N}$ | $2 \times I_{\Delta N}$ | $5 \times I_{\Delta N}$ | 500 A |
| allgemeine (1) | maximale Ausschaltzeit (s) | 0,3 | 0,15 | 0,04 | 0,04 |
| S (2) | maximale Ausschaltzeit (s) | 0,5 | 0,2 | 0,15 | 0,15 |
| | minimale Auslösezeit (s) | 0,13 | 0,06 | 0,05 | 0,04 |
| (1) Es wird keine minimale Auslösezeit gefordert<br>(2) Nur für $I_N \geq$ 25 A und $I_{\Delta N}$ > 0,03 A<br>(3) Die Begriffe "Auslösezeit" und "Ausschaltzeit", d.h. hier "Gesamtausschaltzeit" sind in den Schaltgerätenormen definiert. | | | | | |

Um also für höhere Fehlerströme eine weitreichende Selektivität mit nachgeschalteten Fehlerstrom-Schutzeinrichtungen der allgemeinen Bauart sowie der Bauarten S mit Überstrom-Schutzeinrichtungen zu erreichen, kann man wie beim Hauptschaltgerät für den Schutz gegen durch Erdfehlerströme verursachte Brände, das im Patent AT 412 830 beschrieben wird, eine minimale Auslösezeit von 0,2 s für das erfindungsgemäße Hauptschaltgerät für den Back-up-Schutz gegen elektrischen Schlag vorsehen.

Der Begriff "Back-up-Schutz" bekommt dabei eine ähnliche Bedeutung, wie er beim Überstromschutz seit langem gebräuchlich ist. Dort bedeutet er eine Vorsicherung (meist Schmelzsicherung), die eine nachgeschaltete Überstrom-Schutzeinrichtung (meist ein LS-Schalter) schützt, wenn der Kurzschlußstrom so hoch ist, daß er sie zerstören würde. Beim Back-up-Schutz schaltet die Vorsicherung den Kurzschlußstrom aus, bevor er einen Schaden anrichten kann, also die nachgeschaltete Schutzeinrichtung versagt. Beim Back-up-Schutz gegen elektrischen Schlag wird in gleicher Weise ein Hauptschaltgerät beim TT-System zusätzlich eingebaut, das beim Versagen der Fehlerstrom-Schutzeinrichtung für den Fehlerschutz die Ausschaltung der auftretenden Fehlerspannung mit vertretbarem Risiko übernimmt. Ein Selektivitätsverhalten des Hauptschaltgerätes mit den zu schützenden nachgeschalteten Fehlerstrom-Schutzeinrichtungen, aber auch LS-Schaltern, ist dabei besonders wichtig, denn im störungsfreien Betrieb sollen ja die Fehlerstrom-Schutzeinrichtungen bzw. die LS-Schalter und nicht das Hauptschaltgerät bei Isolationsfehlern gegen Erde den fehlerhaften Teil der Anlage ausschalten. Bei LS-Schaltern ist dabei zu bedenken, daß in den Normen für die Prüfung der Schnellauslösung die Ausschaltung innerhalb von 0,1 s verlangt wird. Zieht man nach längerer Einbaudauer Alterungserscheinungen in Betracht, dann muß für das vorgeschaltete Hauptschaltgerät eine Mindestauslösezeit von 0,2 s gefordert werden, um die notwendige Selektivität zu sichern. Damit erreicht man gleichzeitig eine höhere Selektivität gegenüber nachgeschalteten Schmelzsicherungen, die aber heute nur mehr selten für den Schutz von Endstromkreisen installiert werden.

Wie bereits erklärt, ist damit auch eine volle Selektivität mit den nachgeschalteten Fehlerstrom-Schutzeinrichtungen aller Bauarten sichergestellt. Naturgemäß tritt beim Schutz gegen den elektrischen Schlag die Zuverlässigkeit der verschiedenen Schutzeinrichtungen in den Vordergrund.

Da Fehlerstrom-Schutzeinrichtungen elektromechanische Schaltgeräte sind, an deren Auslöseempfindlichkeit hohe Anforderungen gestellt werden, muß man mit Ausfällen rechnen. Sie treten auch in der Praxis auf, wie umfangreiche und in der Literatur beschriebene Überprüfungen in schutzgeerdeten Verbraucheranlagen gezeigt haben. Tatsächlich besitzen die heute auf dem Markt befindlichen Fehlerstrom-Schutzeinrichtungen, gleichgültig ob sie mit netzspannungsunabhängiger oder netzspannungsabhängiger Fehlerstromauslösung arbeiten, Ausfallraten $\lambda$ von bis zu 1.000 fit, d.h. Ausfallquoten F im Prozentbereich, und das ist zu hoch.

Hier erhöht nun das erfindungsgemäße Hauptschaltgerät die Zuverlässigkeit des Schutzes gegen elektrischen Schlag wesentlich. Am Eingang der Verteilung installiert, ist es mit nachgeschalteten Fehlerstrom-Schutzeinrichtungen der allgemeinen oder der Bauart S hoch selektiv. Bei Isolationsfehlern in der geschützten Verbraucheranlage wird daher in der Regel eine der nachgeschalteten Fehlerstrom-Schutzeinrichtungen ausschalten. Versagt aber einer dieser Schalter, dann besteht in der ganzen Anlage ein hohes Unfallrisiko, weil bei einem Isolationsfehler in einem der Stromkreise, die wegen der defekten Fehlerstrom-Schutzeinrichtung nun ungeschützt sind, hohe Fehlerspannungen in der ganzen Verbraucheranlage auftreten. Ist aber zentral in der Installation ein erfindungsgemäßes Hauptschaltgerät installiert, dann wird diese Gefahr durch sein Ausschalten beseitigt. Da das erfindungsgemäße Hauptschaltgerät das Prinzip einer Fehlerstrom-Schutzeinrichtung hoher Auslösezuverlässigkeit nach EP 495 771 A2 benützt und vorzugsweise seine elektronischen Baugruppen in einem eigenen Funktionsraum angeordnet sind, der für diese eine niedrige Betriebstemperatur ermöglicht, wie es in der AT-Patentanmeldung A 928/2004 beschrieben wird, liegen seine Ausfallraten $\lambda$ in der gleichen Größenordnung wie bei LS-Schaltern, das heißt, die Serienschaltung des Hauptschaltgerätes mit Fehlerstrom-Schutzeinrichtungen der allgemeinen Bauart oder der Bauart S ist nicht nur hoch selektiv, sondern außerordentlich zuverlässig und ermöglicht dadurch in schutzgeerdeten Verbraucheranlagen für den Schutz gegen elektrischen Schlag ein vertretbares Unfallrisiko.

Dafür muß man die Ausschaltzeiten des erfindungsgemäßen Hauptschaltgerätes so festlegen, daß sie elektropathologisch ein vertretbares Risiko für einen schädlichen elektrischen Schlag bedeuten. Man wird dabei für den Back-up-Schutz naturgemäß längere Zeiten konventionell vereinbaren können, als für den üblichen Fehlerschutz.

Dabei ist zu beachten, daß in schutzgeerdeten Verbraucheranlagen im Fehlerfall oft Fehlerspannungen auftreten, die nahe der Netzspannung gegen Erde, also etwa 200 V, liegen können.

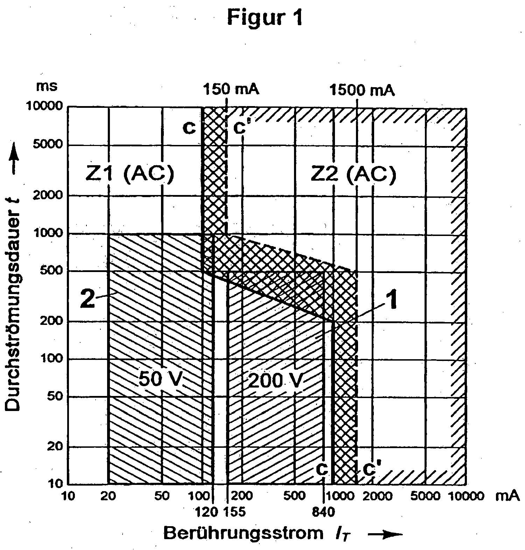

Figur 1 zeigt die Zeit/Stromzonen für ein vertretbares und nicht vertretbares Risiko eines schädlichen elektrischen Schlages Z1 (AC) und Z2 (AC) für Wechselstrom 50 Hz beim Menschen, wie sie dem neuesten Stand des Wissens der Elektropathologie entsprechen. Es sind Schutzbereiche 1 und 2 eingezeichnet für Berührungsströme und Stromwege von Hand-Hand (Hand-Fuß) bis zu beiden Händen-Rumpf (ein Mensch sitzt auf dem Boden und hält ein schadhaftes Elektrogerät mit beiden Händen). Die Grenze wird durch den Übergangsbereich c-c' gebildet. Bei einer Berührungsspannung von 200 V findet man, daß eine Ausschaltzeit des Hauptschaltgerätes von höchstens 0,5 s als Risiko für einen schädlichen elektrischen Schlag noch vertretbar ist, wobei die Grenzlinie c' für den Back-up-Schutz beim TT-System konventionell als gültig festgelegt wird. Tritt bei nicht satten Körperschlüssen eine Berührungsspannung von nur 50 V auf, dann kann die Ausschaltzeit mit 1 s begrenzt werden, obwohl 50 V a.c. in den internationalen Normen für eine unbegrenzte Zeit zugelassen werden. Die Gesamtausschaltzeit des Hauptschaltgerätes von höchstens 0,5 s ist also der Berührungsspannung von 200 V zuzuordnen und damit dem satten Körperschluß bei der Schutzerdung unter ungünstigen Bedingungen. Fordert man diese Gesamtausschaltzeit $t_g$ für einen Fehlerstrom $I_F = 10 \times I_{\Delta N}$ (wobei $I_{\Delta N}$ der Nennfehlerstrom des Hauptschaltgerätes ist), so kommt man zu einer Berechnung des höchstzulässigen Erdungswiderstandes $R_A$ der schutzgeerdeten Verbraucheranlage (TT-System) von

$$R_A \leq \frac{230V}{10 \times I_{\Delta N}}.$$

Für die Festlegung der Kennlinie der Gesamtausschaltzeiten $t_g$ in Abhängigkeit vom Fehlerstrom gilt folgendes:

Wegen der bei Fehlerströmen über $10 \times I_{\Delta N}$ praktisch konstant bleibenden mechanischen Ausschaltzeit ändert sich die Kennlinie nur wenig, auch wenn der Fehlerstrom einige hundert Ampere beträgt und kann weiter mit höchstens 0,5 s konventionell festgelegt werden. Zwischen $0,5 \times I_{\Delta N}$ und $1,0 \times I_{\Delta N}$ geht die Gesamtausschaltzeit $t_g$ nach unendlich. Legt man die Ausschaltkennlinie mit den beiden Punkten $I_{\Delta N}$, 5 s und $10 \times I_{\Delta N}$, 0,5 s mit dem Zwischenwert $2 \times I_{\Delta N}$, 1 s fest, dann folgt daraus eine Ausschaltkennlinie nach Tabelle 2.

Tabelle 2: Maximale Gesamtausschaltzeiten $t_g$ und minimale Auslösezeiten $t_a$ des erfindungsgemäßen Hauptschaltgerätes für den Back-up-Schutz

| Fehlerstrom | $I_{\Delta N}$ | $2 \times I_{\Delta N}$ | $10 \times I_{\Delta N}$ | 100 A | 500 A |
|---|---|---|---|---|---|
| Gesamtausschaltzeit (max) $t_g$ (s) | 5 | 1 | 0,5 | 0,5 | 0,5 |
| Auslösezeit (min) $t_a$ (s) | 0,2 | 0,2 | 0,2 | 0,2 | 0,2 |
| $I_{\Delta N}$ Nennfehlerstrom | | | | | |

Die minimale Auslösezeit beträgt nach dem vorher Gesagten im gesamten Auslösebereich $t_a$ = 0,2 s.

Für die Auslösekennlinie des erfindungsgemäßen Hauptschaltgerätes nach Tabelle 2 wird zur Kennzeichnung der Buchstabe F vorgeschlagen.

Für ein erfindungsgemäßes Hauptschaltgerät mit $I_{\Delta N}$ = 0,1 A darf daher der Erdungswiderstand $R_A$ höchstens 230 Ω, bei $I_{\Delta N}$ = 0,3 A höchstens 77 Ω betragen. In der Praxis liegen die Werte meistens unter 10 Ω und damit wird bei Isolationsfehlern in schutzgeerdeten Verbraucheranlagen beim Versagen der nachgeschalteten Fehlerstrom-Schutzeinrichtungen durch den Back-up-Schutz die Ausschaltung in weniger als 0,5 s erfolgen, also in einer Zeit, die kleiner ist als die Herzperiode eines Menschen. Das reduziert das Risiko eines schädlichen elektrischen Schlages entscheidend.

Das erfindungsgemäße Hauptschaltgerät ist also eine Fehlerstrom-Schutzeinrichtung für den Back-up-Schutz gegen elektrischen Schlag in schutzgeerdeten Verbraucheranlagen mit geschaltetem Neutralleiter und einem Summenstromwandler, dessen Sekundärwicklung mit einem vorzugsweise netzspannungsunabhängigen, elektronischen Speicher- und/oder Verstärker-Schaltkreis verbunden ist, der ein elektromechanisches Relais oder einen Thyristor betätigt, wenn der Fehlerstrom einen vorgegebenen Wert überschreitet. Dadurch wird ein Schaltschloß netzspannungsabhängig durch einen Arbeitsstromauslöser entklinkt und damit die Öffnung der Außenleiterkontakte und des Neutralleiterkontaktes bewirkt. Erfindungsgemäß ist der elektronische Speicher- und/oder Verstärker-Schaltkreis so dimensioniert, daß unabhängig von der Höhe des Fehlerstromes die Auslösezeit des Schaltgerätes immer größer ist als 0,2 s und ab $10 \times I_{\Delta N}$ die Gesamtausschaltzeit immer kleiner ist als 0,5 s.

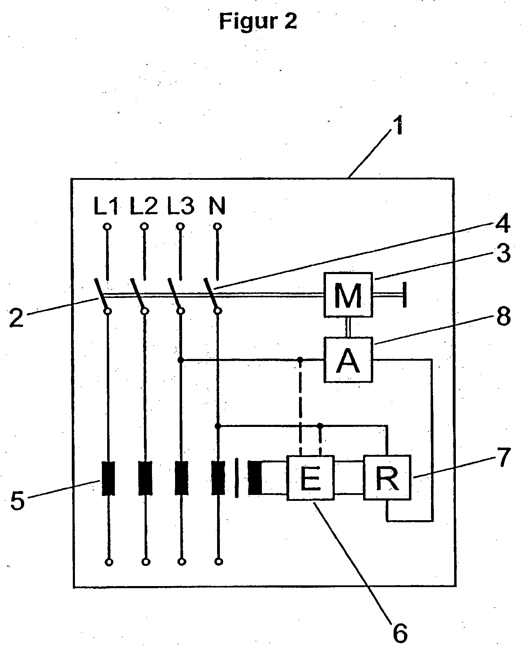

Figur 2 zeigt das erfindungsgemäße Hauptschaltgerät mit dem Gehäuse (1), in dem der Kontaktapparat für die Außenleiter (2) und den Neutralleiter (4), das Schaltschloß (3), die Strombahnen für die Außenleiter L1, L2 und L3 und den Neutralleiter N, der Summenstromwandler (5), ein vorzugsweise netzspannungsunabhängiger elektronischer Speicher- und/oder Verstärker-Schaltkreis (6), ein elektromechanisches Relais oder ein Thyristor (7) und ein Arbeitsstromauslöser (8) untergebracht sind. Sowohl die Strombahnen der Außenleiter L1, L2 und L3 als auch die Strombahn des Neutralleiters N werden beim Ausschalten des Hauptschaltgerätes durch die Außenleiterkontakte (2) und den Neutralleiterkontakt (4) unterbrochen.

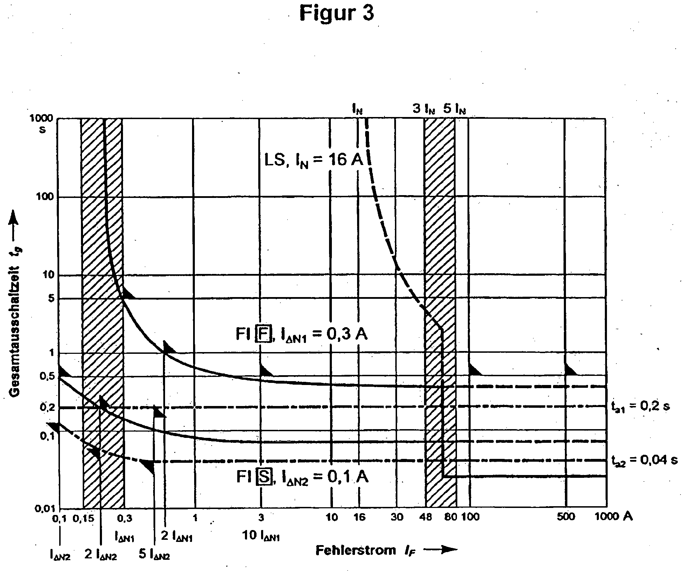

Figur 3 zeigt beispielhaft die Schutzkennlinien des erfindungsgemäßen Hauptschaltgerätes mit einem Nenn-fehlerstrom $I_{\Delta N1}$ = 0,3 A in Serie mit einer Fehlerstrom-Schutzeinrichtung der Bauart S mit einem Nennfehlerstrom $I_{\Delta N2}$ = 0,1 A und einem Leitungsschutzschalter, Nennstrom $I_N$ = 16 A, Charakteristik B, mit Schnellauslösung eingestellt zwischen $3 \times I_N$ und $5 \times I_N$.

Nach Überschreiten der Ansprechgrenze der Schnellauslöser des LS-Schalters bei etwa 60 A schaltet der LS-Schalter mit einer Gesamtausschaltzeit von etwa $t_g$ = 0,02 s aus. Darunter liegt seine Gesamtausschaltzeit $t_g$ mit den thermischen Auslösern im Sekunden- bzw. Minutenbereich und unterhalb etwa 20 A bleibt er bestimmungsgemäß eingeschaltet. Wenn, z.B. bei nicht satten Körperschlüssen, Fehlerströme gegen Erde im Amperebereich liegen und durchaus brandgefährlich sein können, ist der LS-Schalter unwirksam. In der Regel werden dann die Fehlerstrom-Schutzeinrichtungen der Bauarten allgemein oder S ausschalten. Figur 3 zeigt die Ausschaltkennlinie eines S-FI-Schutzschalters, der nach Tabelle 1 mit $I_{\Delta N2}$ = 0,1 A bei $t_g$ = 0,5 s ausschaltet und dessen Gesamtausschaltzeit $t_g$ bei höheren Fehlerströmen mit $2 \times I_{\Delta N2}$ = 0,2 A bei 0,2 s und mit $5 \times I_{\Delta N2}$ = 0,5 A bei 0,1 s, also unterhalb von 0,15 s wie für $5 \times I_{\Delta N2}$ verlangt, liegen. Seine minimale Auslösezeiten $t_{a2}$ betragen entsprechend Tabelle 1 0,13 s bei $I_{\Delta N2}$ und 0,04 s bei 500 A. Er ist daher bei Fehlerströmen über etwa 80 A mit dem nachgeschalteten LS-Schalter selektiv.

Das Hauptschaltgerät schaltet mit $I_{\Delta N1} = 0,3$ A bei 5 s, mit $2 \times I_{\Delta N1} = 0,6$ A unter 1 s und mit $10 \times I_{\Delta N1}$ bzw. 100 A und 500 A unter 0,5 s aus. Seine minimale Auslösezeit $t_{a1}$ beträgt im gesamten Bereich 0,2 s. Es ist daher im gesamten Auslösebereich mit dem nachgeschalteten S-FI-Schutzschalter und auch mit dem LS-Schalter selektiv.

Man erkennt, daß im gesamten Fehlerstrombereich volle Selektivität zwischen dem erfindungsgemäßen Hauptschaltgerät und der nachgeschalteten Fehlerschutzeinrichtung bzw. dem Leitungsschutzschalter gegeben ist, d.h. der LS-Schalter oder der FI-Schutzschalter Bauart S schalten zuerst und das erfindungsgemäße Hauptschaltgerät bleibt eingeschaltet. Nur wenn der S-FI-Schutzschalter (oder etwa eine andere nachgeschaltete Fehlerstrom-Schutzeinrichtung) versagt und nur bei Fehlerströmen unter der Ansprechgrenze der Schnellauslösung des LS-Schalters schaltet das erfindungsgemäße Hauptschaltgerät die Verbraucheranlage aus und verhindert damit ein Anstehen hoher und gefährlicher Fehlerspannungen.

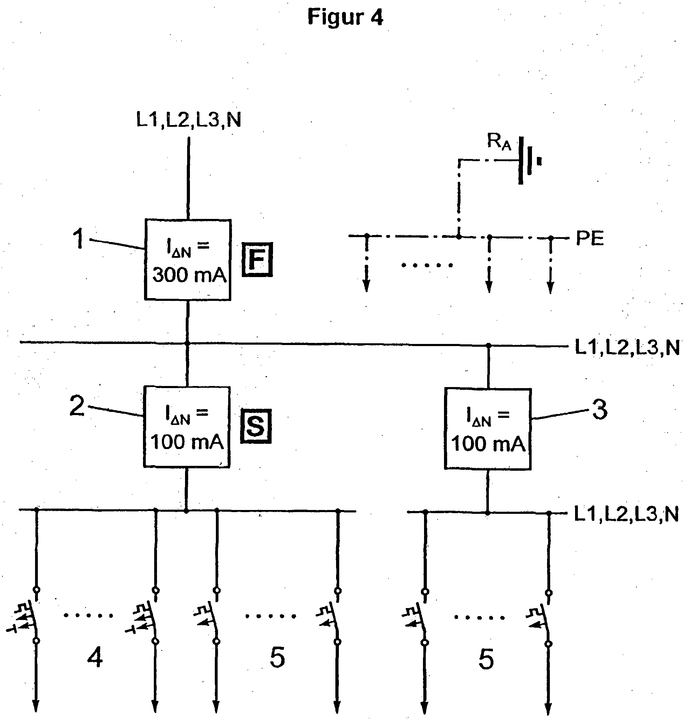

Die Vorteile der erfindungsgemäßen Lösung zeigt beispielhaft das Installationsschema von Figur 4 mit einer schutzgeerdeten Verbraucheranlage mit zwei Unterverteilungen. Eine Unterverteilung verwendet als Fehlerschutz eine Fehlerstrom-Schutzeinrichtung (2) der Bauart S, z.B. Nennstrom 40 A, Nennfehlerstrom $I_{\Delta N} = 0,1$ A, weil Selektivität mit den Endstromkreisen für Steckdosen verlangt wird, in denen LS/FI-Schutzschalter (4), Nennfehlerstrom $I_{\Delta N} = 0,03$ A für den Zusatzschutz verwendet werden. Ein Teil der Endstromkreise dieser Unterverteilung versorgt die Lichtstromkreise, deren Endstromkreise nur gegen Überlast mit LS-Schaltern (5) geschützt sind. Die zweite Unterverteilung, z.B. für Elektrowärmegeräte, wird durch eine Fehlerstrom-Schutzeinrichtung (3) allgemeiner Bauart, z.B. mit einem Nennfehlerstrom $I_{\Delta N} = 0,1$ A, Nennstrom 40 A, geschützt.

Ohne das Hauptschaltgerät (1) würde beim Versagen der Fehlerstrom-Schutzeinrichtungen (2) oder (3) und einem Isolationsfehler in den Endstromkreisen, die nur durch LS-Schalter (5) geschützt sind, die gefährliche Fehlerspannung in der gesamten Verbraucheranlage anstehen, ohne daß ausgeschaltet wird. Das erfindungsgemäße Hauptschaltgerät, für dessen Bauart in den Normen die Kennzeichnung $\boxed{\text{F}}$ vorgeschlagen werden könnte, hat dann z.B. den Nennfehlerstrom $I_{\Delta N} = 0,3$ A, Nennstrom $I_N = 63$ A. Es schaltet bei den in der Praxis in schutzgeerdeten Verbraucheranlagen auftretenden Fehlerströmen in weniger als 0,5 s aus, wenn die Fehlerstrom-Schutzeinrichtungen (2) oder (3) versagen.

**Patentansprüche**

1. Hauptschaltgerät für einen Back-up-Schutz gegen elektrischen Schlag in schutzgeerdeten Verbraucheranlagen, umfassend ein Gehäuse (1), Anschlussklemmen für Netzleitungen, einen Kontaktapparat mit zugehörigem Schaltschloss (3) für die Unterbrechung von Außenleitern L1, L2 und L3 (2) und einem Neutralleiter N (4), einen Arbeitsstromauslöser (8), einen Summenstromwandler (5), einen elektronischen Speicher- und/oder Verstärkerschaltkreis (6) und ein elektromechanisches Relais oder einen Thyristor (7), wobei der elektronische Speicher- und/oder Verstärkerschaltkreis (6) mit einer Sekundärwicklung des Summenstromwandlers (5) verbunden ist und, wenn ein Fehlerstrom einen vorgegebenen Wert überschreitet, über das elektromechanische Relais oder den Thyristor (7) netzspannungsabhängig den Arbeitsstromauslöser (8) betätigt, der das Schaltschloss (3) entklinkt und damit die Öffnung des Kontaktapparates bewirkt, **dadurch gekennzeichnet, dass** der elektronische Speicher- und/oder Verstärkerschaltkreis (6) so dimensioniert ist, dass unabhängig von der Höhe des Fehlerstromes die Auslösezeit des Hauptschaltgerätes immer größer ist als 0,2 s und für Fehlerströme über dem zehnfachen Wert des Nennfehlerstromes die Gesamtausschaltzeit immer kleiner ist als 0,5 s.

2. Hauptschaltgerät nach Anspruch 1, **dadurch gekennzeichnet, dass** der elektronische Speicher- und/oder Verstärkerschaltkreis (6) netzspannungsunabhängig ist.

3. Hauptschaltgerät nach Anspruch 1 oder 2, **dadurch gekennzeichnet, dass** das Gehäuse (1) einen ersten Funktionsraum und einen von diesem thermisch getrennten zweiten Funktionsraum aufweist.

4. Hauptschaltgerät nach Anspruch 3, **dadurch gekennzeichnet, dass** in dem ersten Funktionsraum wenigstens der Kontaktapparat, das Schaltschloss (3), der Arbeitsstromauslöser (8) und der Summenstromwandler (5) angeordnet ist.

5. Hauptschaltgerät nach Anspruch 3 oder 4, **dadurch gekennzeichnet, dass** in dem zweiten Funktionstraum wenigstens der elektronische Speicher- und/oder Verstärkerschaltkreis (6) und das elektromechanische Relais oder der Thyristor (7) angeordnet ist.

## Claims

1. Master switchgear for back-up protection against electric shock in earthed consumer systems, comprising a housing (1), connecting terminals for power lines, a contact apparatus having an associated switch latch (3) for disconnecting external lines L1, L2 and L3 (2) and a neutral line N (4), overload release means (8), a summation current transformer (5), an electronic memory- and/or amplifier circuit (6) and an electromechanical relay or a thyristor (7), the electronic memory- and/or amplifier circuit (6) being connected to a secondary winding of the summation current transformer (5) and, if a fault current exceeds a predefined value, activating the overload release means (8) in a supply-voltage-dependent manner by means of the electromechanical relay or the thyristor (7), which overload release means unlatches the switch latch (3) and thus causes the contact apparatus to open, **characterised in that** the electronic memory- and/or amplifier circuit (6) is dimensioned such that, irrespective of the magnitude of the fault current, the tripping time of the master switchgear is always greater than 0.2 s and, for fault currents which are more than ten times the value of the nominal fault current, the total interruption time is always less than 0.5 s.

2. Master switchgear according to claim 1, **characterised in that** the electronic memory- and/or amplifier circuit (6) are/is independent of the supply voltage.

3. Master switchgear according to either claim 1 or claim 2, **characterised in that** the housing (1) comprises a first functional space and a second functional space which is thermally isolated therefrom.

4. Master switchgear according to claim 3, **characterised in that** at least the contact apparatus, the switch latch (3), the overload release means (8) and the summation current transformer (5) are arranged in the first functional space.

5. Master switchgear according to either claim 3 or claim 4, **characterised in that** at least the electronic memory- and/or amplifier circuit (6) and the electromechanical relay or the thyristor (7) are arranged in the second functional space.

## Revendications

1. Appareil interrupteur principal destiné à une protection de secours contre toute décharge électrique dans des installations de consommateurs protégées par mise à la terre, comprenant un boîtier (1), des bornes de raccordement pour des lignes de réseau, un appareil de contact pourvu d'un verrou de maintien (3) associé pour la coupure de conducteurs externes L1, L2 et L3 (2) et d'un conducteur neutre N (4), un déclencheur à courant de travail (8), un transformateur sommateur de courant (5), un circuit de mémorisation et/ou d'amplification (6) électronique et un relais électromécanique ou un thyristor (7), le circuit de mémorisation et/ou d'amplification (6) électronique étant relié à un enroulement secondaire du transformateur sommateur de courant (5) et actionnant en fonction de la tension de réseau, lorsqu'un courant résiduel dépasse une valeur prescrite, le déclencheur à courant de travail (8) par l'intermédiaire du relais électromécanique ou du thyristor (7), lequel déclencheur à courant de travail libère le verrou de maintien (3) et entraîne ce faisant l'ouverture de l'appareil de contact, **caractérisé en ce que** le circuit de mémorisation et/ou d'amplification (6) électronique présente des dimensions telles que indépendamment de l'amplitude du courant résiduel, le temps de déclenchement de l'appareil interrupteur principal est toujours supérieur à 0,2 s et, pour des courants résiduels dix fois supérieurs au courant résiduel nominal, le temps de coupure total est toujours inférieur à 0,5 s.

2. Appareil interrupteur principal selon la revendication 1, **caractérisé en ce que** le circuit de mémorisation et/ou d'amplification (6) électronique est indépendant de la tension de réseau.

3. Appareil interrupteur principal selon la revendication 1 ou 2, **caractérisé en ce que** le boîtier (1) présente un premier espace fonctionnel et un deuxième espace fonctionnel séparé de ce dernier thermiquement.

4. Appareil interrupteur principal selon la revendication 3, **caractérisé en ce qu'**au moins l'appareil de contact, le verrou de maintien (3), le déclencheur à courant de travail (8) et le transformateur sommateur de courant (5) sont disposés dans le premier espace fonctionnel.

5. Appareil interrupteur principal selon la revendication 3 ou 4, **caractérisé en ce qu'**au moins le circuit de mémorisation et/ou d'amplification (6) électronique et le relais électromécanique ou le thyristor (7) sont disposés dans le deuxième espace fonctionnel.

# Figur 1

## Figur 2

# Figur 3

# Figur 4

**EP 1 825 583 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 412830
- EP 495771 A2
- AT 9282004 A